Europäisches Patentamt

European Patent Office

Office européen des brevets

(19)

(11) **EP 0 581 091 B1**

(12) **EUROPÄISCHE PATENTSCHRIFT**

(45) Veröffentlichungstag und Bekanntmachung des Hinweises auf die Patenterteilung:
**06.11.1996  Patentblatt 1996/45**

(51) Int Cl.⁶: **H05B 41/29**

(21) Anmeldenummer: **93111078.7**

(22) Anmeldetag: **10.07.1993**

(54) **Vorschaltgerät zum Betreiben von Hockdruck-Gasentladungslampen mit niederfrequenter, rechteckförmiger Spannung in Kraftfahrzeugen**

Ballast for supplying high pressure discharge lamps in vehicles with a low-frequency square-wave voltage

Ballast pour alimenter des lampes à décharge haute-pression avec un signal carré basse-fréquence dans des véhicules

(84) Benannte Vertragsstaaten:
**DE ES FR GB IT**

(30) Priorität: **29.07.1992  DE 4224996**

(43) Veröffentlichungstag der Anmeldung:
**02.02.1994  Patentblatt 1994/05**

(73) Patentinhaber: **Hella KG Hueck & Co.**
**59552 Lippstadt (DE)**

(72) Erfinder:
- **Daub, Wolfgang**
  **D-59558 Lippstadt (DE)**
- **Helle, Hans-Michael**
  **D-59557 Lippstadt (DE)**

(56) Entgegenhaltungen:
**EP-A- 0 528 769          EP-A- 0 540 924**
**WO-A-93/12630           DE-A- 3 805 159**
**GB-A- 2 178 607         US-A- 4 904 903**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Vorschaltgerät zum Betreiben von Hochdruck-Gasentladungslampen mit niederfrequenter, rechteckförmiger Spannung in Kraftfahrzeugen, mit einem DC/DC-Wandler, der aus einer auf die Fahrzeugmasse bezogenen positiven Bordspannung eine geregelte Gleichspannung erzeugt, mit einem Wechselrichter, der als ein H-Brückenschalter ausgebildet ist, über den die Hochdruck-Gasentladungslampe als Last aus der geregelten Gleichspannung des DC/DC-Wandlers betrieben wird, wobei der H-Brückenschalter niederfrequent die Polarität der Lampenspannung kommutiert, so daß die Hochdruck-Gasentladungslampe, bezogen auf ihre Eingangsklemmen, mit einer niederfrequenten, rechteckförmigen Wechselspannung ohne DC-Anteil versorgt wird, mit einer induktiven Komponente der Last, die durch ein Zündgerät mit Induktivität zwischen der Hochdruck-Gasentladungslampe und dem H-Brückenschalter gegeben ist und mit einem Pulsgenerator, der Rechteckpulse zur Umsteuerung des H-Brückenschalters erzeugt.

Aus der deutschen Patentschrift DE 34 45 817 C2 ist eine Schaltungsanordnung zum Betrieb einer Hochdruck-Entladungslampe an Niedervolt-Gleichspannung bekannt. Diese Schaltungsanordnung verfügt über einen DC/DC-Wandler, der eine gegenüber der positiven Eingangsspannung erhöhte Gleichspannung erzeugt. Zudem weist die Schaltungsanordnung einen Wechselrichter auf, der als ein H-Brückenschalter ausgebildet ist, über den die Hochdruck-Gasentladungslampe als Last aus der Gleichspannung des DC/DC-Wandlers betrieben wird, wobei der H-Brückenschalter niederfrequent die Polarität der Lampenspannung kommutiert, so daß die Hochdruck-Gasentladungslampe, bezogen auf ihre Eingangsklemmen, mit einer niederfrequenten, rechteckförmigen Wechselspannung ohne den DC-Anteil versorgt wird. Zwischen dem H-Brückenschalter und der Hochdruck-Gasentladungslampe weist diese Schaltungsanordnung ein Zündgerät auf, das als Überlagerungszündgerät ausgebildet ist und somit eine induktive Komponente zu der Last hinzufügt. Desweiteren weist die bekannte Schaltungsanordnung einen Pulsgenerator auf, der Rechteckpulse zur Umsteuerung des H-Brückenschalters erzeugt.

Bei der bekannten Schaltungsanordnung erweist sich als nachteilig, daß unerwünschte Brückenquerströme für den zuverlässigen Betrieb der Hochdruck-Gasentladungslampe nicht oder nur bei Verminderung der Umschaltgeschwindigkeit vermieden werden können, so daß bei dem Betrieb der Hochdruck-Gasentladungslampe durch den Wechselrichter hohe Ansteuer- und Verlustleistungen entstehen. Desweiteren erweist sich bei der bekannten Schaltungsanordnung als nachteilig, daß diese durch die Verwendung mehrerer Spannungswandler aufwendig und kostenintensiv ist. Aus dem United States Patent Nr. 46 49 321 und der deutschen Patentschrift DE 35 23 306 C2 sind Schaltungsanordnungen zum Betrieb von Hochdruck-Gasentladungslampen bekannt, bei denen ein Wechselrichter eine niederfrequente, rechteckförmige Wechselspannung ohne DC-Anteil zur Versorgung der Hochdruck-Gasentladungslampe erzeugt.

Bei beiden Schaltungsanordnungen erweist sich als besonders nachteilig, daß diese keinen DC/DC-Wandler aufweisen, der aus einer auf die Fahrzeugmasse bezogenen positiven Bordspannung eine geregelte Gleichspannung erzeugt, wodurch diese Schaltungsanordnungen nicht zum Betrieb an dem Bordnetz eines Kraftfahrzeuges geeignet sind. Bei beiden Schaltungsanordnungen werden bei dem Umschalten der Brückenzweige Pausenzeiten, angesteuert durch einen Pulsgenerator, erzeugt. Bei der Schaltungsanordnung gemäß dem United States Patent 46 49 321 erweist sich dabei als besonders nachteilig, daß sich die Pulse für die Ansteuerung der einzelnen Brückenzweige überlappen, wodurch hohe Verlustleistungen erzeugt werden, was zu einem schlechten Wirkungsgrad der Schaltungsanordnung führt.

Bei der Schaltungsanordnung gemäß der deutschen Patentschrift DE 36 23 306 C2 erweist sich als besonders nachteilig, daß, um zu vermeiden, daß die Entladungslampe während der Pausenzeit verlischt, ein zusätzlicher Schwingkreis benötigt wird, wodurch die Schaltungsanordnung, aufwendig herstellbar und abstimmbar, kostenintensiv und nur schwer auf unterschiedliche Pausenzeiten einstellbar ist.

Der Erfindung liegt die Aufgabe zugrunde, ein Vorschaltgerät zum Betreiben von Hochdruck-Gasentladungslampen mit niederfrequenter, rechteckförmiger Spannung in Kraftfahrzeugen zu schaffen, bei dem auf einfache und kostengünstige Weise die Ansteuer- und Verlustleistungen des Wechselrichters möglichst gering gehalten werden, bei dem möglichst kleine Brückenquerströme fließen und die Lampenspannung möglichst unabhängig von der positiven Bordspannung ist.

Die Aufgabe wird erfindungsgemäß dadurch gelöst, daß der DC/DC-Wandler, bezogen auf die Fahrzeugmasse, eine geregelte negative Gleichspannung erzeugt, daß das zeitlich gemittelte Lampenpotential bei dem Betrieb der Hochdruck-Gasentladungslampe negativ zur Fahrzeugmasse ist und daß der Pulsgenerator Rechteckpulse liefert, aufgrund derer bei jedem Umschalten der Brückenzweige eine Totzeit erzeugt wird, über die alle Schalttransistoren des H-Brückenschalters abgeschaltet sind, wobei die Pulsdauer der Rechteckpulse von dem Pulsgenerator der Totzeit entspricht und die Pulswiederholfrequenz der doppelten Rechteckfrequenz entspricht.

Es ist von Vorteil, daß der DC/DC-Wandler, bezogen auf die Fahrzeugmasse, eine geregelte negative Gleichspannung erzeugt und daß das zeitlich gemittelte Lampenpotential bei dem Betrieb der Hochdruck-Gasentladungslampe negativ zur Fahrzeugmasse ist, wodurch die Lampenspannung möglichst unabhängig von den Schwankungen der positiven Bordspannung ist, die in Kraftfahrzeugen häufig großen Schwankungen unterliegt, die Eingangsspannung des DC/DC-Wandlers als Hilfsspannung zur Ansteuerung des Brückenschalters benutzt werden kann, so daß keine weitere Hilfsspannung erzeugt werden muß und bei Betrieb der Hochdruck-Gasentladungslampe mit einer zur Umgebung negativen mittleren Spannung, auf einfache Weise eine Natriumdiffusion durch den Quarzkolben vermieden wird.

Dadurch wird ein zuverlässiger Betrieb der Hochdruck-Gasentladungslampe bei gleichbleibender Lichtintensität gewährleistet.

Dadurch, daß der Pulsgenerator Rechteckpulse liefert, aufgrund derer bei jedem Umschalter der Brückenzweige eine Totzeit erzeugt wird, über die alle Schalttransistoren des H-Brückenschalters abgeschaltet sind, wobei die Pulsdauer der Rechteckpulse von dem Pulsgenerator der Totzeit entspricht und die Pulswiederholfrequenz der doppelten Rechteckfrequenz entspricht, ergibt sich der Vorteil, daß auf einfache und kostengünstige Weise bei möglichst geringen Brückenquerströmen die Ansteuer- und Verlustleistungen des Wechselrichters möglichst gering gehalten werden können und eine einfache und zuverlässige Ansteuerung des Wechselrichters ermöglicht wird. Der hohe erreichbare Wirkungsgrad des Wechselrichters wird insbesondere dadurch erreicht, daß die Totzeit leicht an die jeweiligen Anforderungen angepaßt werden kann.

In diesem Zusammenhang erweist sich als vorteilhaft, daß die Schalttransistoren des N-Brückenschalters als Power-MOS-FET's ausgebildet sind, so daß während der Totzeit der Laststrom mit Hilfe der induktiven Komponente der Last, gegeben durch das Zündgerät, über die parasitären Drain-Source-Dioden der Power-MOS-FETs des zuletzt inaktiven Brückenzweiges aufrecht erhalten wird und nach Beendigung der Totzeit ohne Unterbrechung kommutiert wird.

Es ist von Vorteil, daß der Pulsgenerator zum einen mit einem Teiler, der als ein flankengetriggertes Flip-Flop ausgebildet ist und zum anderen mit ersten Eingängen eines ersten NANDs und eines zweiten NANDs verbunden ist, daß der erste und der zweite Ausgang des Teilers mit je einem zweiten Eingang des ersten NANDs und zweiten NANDs verbunden ist, daß jeder Ausgang des ersten NANDs und des zweiten NANDs mit je zwei schaltbaren Stromquellen verbunden ist, die die Schalttransistoren je eines Brückenzweiges umsteuern, wobei die schaltbaren Stromquellen mit der positiven Bordspannung verbunden sind, weil somit auf besonders einfache und kostengünstige Art und Weise bei Verwendung nur eines Pulsgenerators und weniger auch integrierbarer preiswerter Schaltungskomponenten eine rechteckförmige, niederfrequente Spannung an den Eingangsklemmen der Last erzeugt werden kann, wobei auf einfachste Art und Weise eine Totzeit erzeugt wird, über die alle Schalttransistoren des H-Brückenschalters abgeschaltet und somit hochohmig sind. Durch die verwendeten Bauteile und deren Anordnung wird somit ein möglichst schnelles Umschalten der Brückenzweige bei möglichst geringen Brückenquerströmen und der Vermeidung einer Diskontinuität in dem Strom und in der Spannung der Last ermöglicht, wodurch ein hoher Wirkungsgrad bei dem Betrieb erreicht wird.

Als besonders vorteilhaft erweist sich dabei, daß die schaltbaren Stromquellen an die positive Bordspannung angeschlossen sind, der H-Brückenschalter jedoch zwischen der negativen geregelten Gleichspannung des DC/DC-Wandlers und der Fahrzeugmasse schaltet, so daß die Ansteuerung des H-Brückenschalters unabhängig von der geregelten Gleichspannung des DC/DC-Wandlers ist und keine weiteren Hilfsspannungen zum Betrieb des Wechselrichters erforderlich sind.

Ein Ausführungsbeispiel ist in den Zeichnungen dargestellt und wird im folgenden anhand der Zeichnungen näher beschrieben.

Gleiche oder gleichwirkende Bauteile sind in den Zeichnungen mit gleichen Bezugszeichen versehen.

Es zeigen

Figur 1     eine vereinfacht dargestellte Schaltungsanordnung eines Wechselrichters mit Ansteuerung;

Figur 2     Zeitdiagramme mit Bezug auf ausgewählte Spannungspunkte in Figur 1.

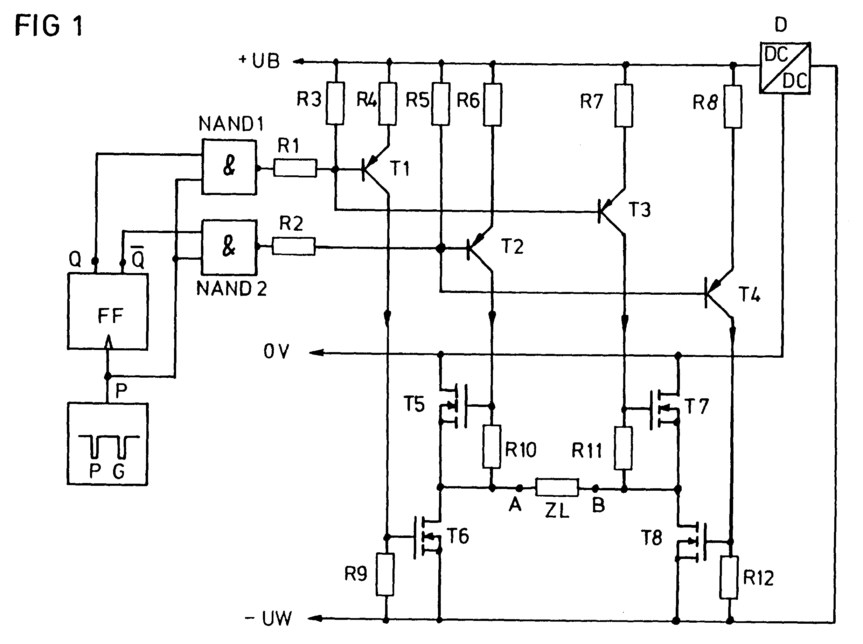

Figur 1 zeigt ein Ausführungsbeispiel einer Schaltungsanordnung gemäß dem Erfindungsgegenstand. Die hier nicht gezeigte Hochdruck-Gasentladungslampe ist als ohmsche Last (ZL) zwischen den Eingangsklemmen (A, B) dargestellt. Ein Zündgerät, daß induktive Komponenten aufweist, ist zwischen der Hochdruck-Gasentladungslampe und den Eingangsklemmen (A, B) angeordnet. Das in der Figur 1 dargestellte Vorschaltgerät besteht aus einem DC/DC-Wandler (D) mit negativer Ausgangsspannung, einem Pulsgenerator (PG) zur Erzeugung schmaler digitaler Pulse, einem Frequenzteiler (FF), zwei Logikgattern (NAND 1, NAND 2) mit je zwei Eingängen, vier schaltbaren Stromquellen (T1 - T4, R1 - R8) sowie einem H-Brückenschalter mit den Schalttransistoren (T5 - T8), die als Power-MOS-FET's ausgebildet sind und deren Gate-Source-Widerstände (R9 - R12).

Der Pulsgenerator (PG), der schmale Rechteckpulse erzeugt, deren Pulsdauer (t) der Totzeit entspricht und dessen Pulswiederholfrequenz der doppelten Rechteckfrequenz (2f) entspricht, ist zum einen mit dem Eingang eines Teilers (FF), der als ein positiv-flankengetriggertes Flip-Flop ausgebildet ist, und zum anderen mit je einem ersten Eingang des ersten NANDs (NAND1) und des zweiten NANDs (NAND 2) verbunden. In dieser Verbindung ist der Spannungspunkt (P) gekennzeichnet.

Der erste Ausgang (Q) des Teilers (FF) ist mit dem zweiten Eingang des ersten NANDs (NAND 1) verbunden, der zweite Ausgang ($\overline{Q}$) des Teilers (FF) ist mit dem zweiten Eingang des zweiten NANDs (NAND 2) verbunden. Der Ausgang des ersten NANDs (NAND 1) ist mit einer ersten schaltbaren Stromquelle (T1, R4) über einen ersten Spannungsteiler (R1, R3) verbunden. Zudem ist der Ausgang des ersten NANDs (NAND 1) über den ersten Spannungsteiler (R1, R3) mit einer dritten schaltbaren Stromquelle (T3, R7) verbunden. Der Ausgang des zweiten NANDs (NAND 2) ist über einen zweiten Spannungsteiler (R2, R5) sowohl mit einer zweiten Stromquelle (T2, R6) als auch mit einer vierten Stromquelle (T4, R8) verbunden. Die Schalteinrichtungen der schaltbaren Stromquellen sind dabei als bipolare Transistoren (T1, T2, T3, T4) ausgebildet, deren Basis jeweils über die Ausgänge der NANDs (NAND 1, NAND 2) zur Umschaltung angesteuert wird. Die Emitter der bipolaren Transistoren (T1, T2, T3, T4) sind über den jeweiligen Widerstand (R4, R6, R7, R8) mit der positiven Bordspannung (+UB) des Kraftfahrzeugs verbunden. Die Kollektoren der bipolaren Transistoren (T1, T2, T3, T4) sind elektrisch leitend mit den Gates der Schalttransistoren (T5 - T8) und den Widerständen (R9 - R12) verbunden. Die Verbindung ist derart gestaltet, daß jedes NAND (NAND 1, NAND 2) je eine Brückendiagonale ansteuert. Zwischen den Brückendiagonalen sind die Eingangsklemmen (A, B) der Last (ZL), bestehend aus der Hochdruck-Gasentladungslampe und dem Zündgerät angeordnet. Die Schaltstrecken der Schalttransistoren (T5 - T8) sind zwischen Fahrzeugmasse (OV) und der am Ausgang des DC/DC-Wandlers (D) anliegenden negativen geregelten Gleichspannung (-UW) angeordnet. Der DC/DC-Wandler (D) ist zum einen mit der positiven Bordspannung (+UB) und zum anderen mit der Fahrzeugmasse (OV) verbunden.

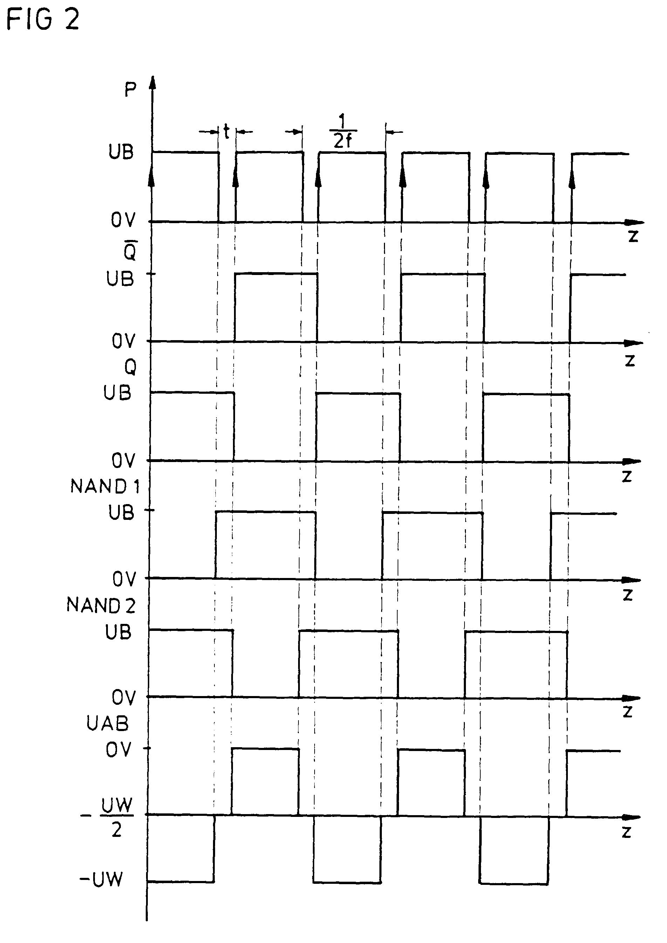

Im folgenden wird anhand Figur 2 die Funktion der erfindungsgemäßen Schaltungsanordnung erläutert.

Figur 2 zeigt sechs Zeitdiagramme, in denen der Spannungsverlauf an dem Spannungspunkt (P), dem ersten Ausgang (Q) des Teilers (FF), des zweiten Ausgangs ($\overline{Q}$) des Teilers (FF), dem Ausgang des ersten NANDs (NAND 1), dem Ausgang des zweiten NANDs (NAND 2) und an den Eingangsklemmen (A, B) der komplexen Last (ZL), bestehend aus der Hochdruck-Gasentladungslampe und dem Zündgerät mit Induktivität in Abhängigkeit von der Zeit (z) dargestellt ist.

Der Pulsgenerator (PG) liefert digitale LOW-Impulse der Zeitdauer (t) und der Wiederholfrequenz (2f), wobei LOW = 0 Volt und HIGH = +UB entsprechen. Der Pulsgenerator (PG) steuert den Teiler (FF), ein positivflankengetriggertes Flip-Flop, dessen Ausgänge (Q, $\overline{Q}$) mit jeder positiven Pulsflanke ihren Status wechseln, an. Mit den NAND-Gattern (NAND 1, NAND 2) werden die Signale von dem Spannungspunkt (P) und dem ersten Ausgang (Q) beziehungsweise dem zweiten Ausgang ($\overline{Q}$) des Teilers (FF) so miteinander verknüpft, daß während der Totzeit die Ausgangssignale der NANDs gleich (NAND 1 = NAND 2 = HIGH) und außerhalb dieser Totzeiten entgegengesetzt (NAND 1 = $\overline{\text{NAND 2}}$) sind. Während das Ausgangssignal des ersten NANDs (NAND 1) gleich LOW ist, ist das Ausgangssignal des zweiten NANDs (NAND 2) gleich HIGH und umgekehrt. Ist z. B. das Ausgangssignal des ersten NANDs (NAND 1) gleich LOW, gleich OV, so sind die Stromquellen (T1 und T3) aufgesteuert und aufgrund des Ausgangssignals des zweiten NANDs (NAND 2) gleich HIGH, gleich +UB, sind die Stromquellen (T2 und T4) gesperrt. Die aktive Stromquelle (T1) steuert den Schalttransistor (T6) und die aktive Stromquelle (T3) steuert den Schalttransistor (T7) auf. Wegen der inaktiven Stromquellen (T2, T4) sind die Schalttransistoren (T5, T8) gesperrt, so daß ein Laststrom von der Eingangsklemme (B) über die Last (ZL) zur Eingangsklemme (A) fließt. Mit dem nächsten LOW-Puls des Pulsgenerators (PG) werden die Stromquellen (T1, T3) gesperrt. Die Stromquellen (T2, T4) bleiben während des LOW-Impulses weiterhin gesperrt, so daß die Schalttransistoren (T6, T7) Zeit haben, in den gesperrten Zustand überzugehen. Ein möglicherweise induktiv weitergeführter Laststrom von der Eingangsklemme (B) zur Eingangsklemme (A) fließt während dieser Zeit über die parasitären Drain-Source-Dioden der Schalttransistoren (T5, T8). Am Ende des LOW-Pulses von dem Pulsgenerator (PG) werden die Stromquellen (T2, T4) aktiviert und der Brückenzweig, bestehend aus den Schalttransistoren (T5, T8) eingeschaltet, so daß ein Strom von der Eingangsklemme (A) über die Last (ZL) zur Eingangsklemme (B) fließen kann.

In den Zeitdiagrammen sind die Zeitachsen mit einem kleinen z gekennzeichnet, die Pulsdauer, die der Totzeit entspricht, ist mit einem kleinen t gekennzeichnet, zudem ist der Kehrwert der Pulswiederholfrequenz (1 : 2 f) beispielhaft eingezeichnet.

Die Pulsdauer (t), die der Totzeit entspricht, kann beispielhaft etwa eine Mikrosekunde betragen. Bei anderen Ausführungsbeispielen kann die Pulsdauer auch größer oder kleiner gewählt werden. Die minimale Pulsdauer (t) ist dabei durch die maximale Schaltgeschwindigkeit der Schalttransistoren (T5 - T8) bestimmt. Die maximale Pulsdauer ist durch die Zeit bestimmt, bei der der Lampenstrom an den Eingangsklemmen (A, B) nicht unterbrochen wird, daß heißt, durch die parasitären Drain-Source-Dioden der Schalttransistoren (T5 -T8) und den Induktivitäten aufrechterhalten wird.

**Patentansprüche**

1. Vorschaltgerät zum Betreiben von Hochdruck-Gasentladungslampen mit niederfrequenter, rechteckförmiger Spannung in Kraftfahrzeugen, mit einem DC/DC-Wandler (D), der aus einer auf die Fahrzeugmasse (OV) bezogenen positiven Bordspannung (+UB) eine geregelte Gleichspannung (-UW) erzeugt, mit einem Wechselrichter, der als ein H-Brückenschalter ausgebildet ist, über den die Hochdruck-Gasentladungslampe als Last (ZL) aus der geregelten Gleichspannung (-UW) des DC/DC-Wandlers (D) betrieben wird, wobei der H-Brückenschalter niederfrequent die Polarität der Lampenspannung (UAB) kommutiert, so daß die Hochdruck-Gasentladungslampe, bezogen auf ihre Eingangsklemmen (A, B), mit einer niederfrequenten, rechteckförmigen Wechselspannung ohne DC-Anteil versorgt wird, mit einer induktiven Komponente der Last (ZL), die durch ein Zündgerät mit Induktivität zwischen der Hochdruck-Gasentladungslampe und dem H-Brückenschalter gegeben ist und mit einem Pulsgenerator (PG), der Rechteckpulse zur Umsteuerung des H-Brückenschalters erzeugt, dadurch gekennzeichnet, daß der DC/DC-Wandler (D) bezogen auf die Fahrzeugmasse (OV) eine geregelte negative Gleichspannung (-UW) erzeugt, daß das zeitlich gemittelte Lampenpotential bei dem Betrieb der Hochdruck-Gasentladungslampe negativ zur Fahrzeugmasse (OV) ist und daß der Pulsgenerator (PG) Rechteckpulse liefert, aufgrund derer bei jedem Umschalter der Brückenzweige eine Totzeit erzeugt wird über die alle Schalttransistoren (T5 - T8) des H-Brückschalters abgeschaltet sind, wobei die Pulsdauer (t) der Rechteckpulse von dem Pulsgenerator (PG) der Totzeit entspricht und die Pulswiederholfrequenz der doppelten Rechteckfrequenz (2f) entspricht.

2. Vorschaltgerät nach Anspruch 1, dadurch gekennzeichnet, daß die Schalttransistoren (T5 - T8) des Brückenschalters als Power-MOS-FET's ausgebildet sind.

3. Vorschaltgerät nach Anspruch 2, dadurch gekennzeichnet, daß der Pulsgenerator (PG) zum einen mit einem Teiler (FF), der als ein flankengetriggertes Flip-Flop ausgebildet ist und zum anderen mit den ersten Eingängen eines ersten NANDs (NAND 1) und eines zweiten NANDs (NAND 2) verbunden ist, daß der erste und zweite Ausgang (Q, $\bar{Q}$) des Teilers (FF) mit je einem zweiten Eingang des ersten NANDs (NAND 1) und des zweiten NANDs (NAND 2) verbunden ist, daß jeder Ausgang des ersten NANDs (NAND 1) und des zweiten NANDs (NAND 2) mit je zwei schaltbaren Stromquellen (T1 - T4, R1 - R8) verbunden ist, die die Schalttransistoren (T5 - T8) je eines Brückenzweiges umsteuern, wobei die schaltbaren Stromquellen (T1 - T4, R1 - R8) mit der positiven Bordspannung (+UB) verbunden sind.

**Claims**

1. Add-on unit for operating high-pressure gas-discharge lamps of low frequency square voltage in motor vehicles, with a DC/DC converter (D) which generates from a positive board voltage (+UB) related to the vehicle mass (OV) a regulated direct voltage (-UW), with a rectifier arranged as an H-bridge switch through which the high-pressure gas-discharge lamp is operated as a load (ZL) of the regulated direct voltage (-UW) of the DC/DC converter (D), and that the H-bridge switch commutes the polarity of the lamp voltage (UAB) at low frequency, so that the high-pressure gas-discharge lamp is supplied, relative to its input clamps (A, B), with a low-frequency square alternating current without DC portion, with an inductive component of the load (ZL) which is given by an ignition device with inductivity between the high-pressure gas-discharge lamp and the H-bridge switch, and with a pulse generator (PG) which generates square pulses for resetting the H-bridge switch, **characterised in that** the DC/DC converter (D) generates, relative to the vehicle mass (OV), a regulated negative direct voltage (-UW), that the temporally averaged lamp potential during operation of the high-pressure gas-discharge lamp is negative to the vehicle mass (OV), and that the pulse generator (PG) delivers square pulses based on which a dead period is generated at each switch of the bridge branches during which all switch transistors (T5 - T8) of the H-bridge switch are switched off, and that the pulse duration (t) of the square pulses of the pulse generator (PG) corresponds with the dead period, and the pulse repeat frequency equals double the square frequency (2f).

2. Add-on unit according to Claim 1, **characterised in that** the switch transistors (T5 - T8) of the bridge switch are power-MOSFETs.

3. Add-on unit according to Claim 2, **characterised in that** the pulse generator (PG) is connected, on the one hand, to a splitter (FF) in the form of a flank triggered flip-flop and, on the other hand, to the first inputs of a first NAND (NAND 1) and a second NAND (NAND 2), that the first and second output (Q, Q) of the splitter (FF) is connected to a respective second input of the first NAND (NAND 1) and the second NAND (NAND 2), that each output of the first NAND (NAND 1) and of the second NAND (NAND 2) is connected to two respective switchable power sources (T1 - T4, R1 - R8) which reset the switch transistors (T5 - T8) of a respective bridge branch, and that the switchable power sources (T1 - T4, R1 - R8) are connected to the positive board voltage (+UB).

**Revendications**

1. Ballast pour faire fonctionner des lampes à décharge haute pression sous une tension rectangulaire de basse fréquence dans les véhicules automobiles, comprenant un convertisseur continu-continu (D) qui génère à partir d'une tension de bord positive (+UB), par rapport à la masse (0V) du véhicule, une tension continue régulée (-UW), un onduleur réalisé comme un pont d'interrupteurs en H, à travers duquel la lampe à décharge haute pression est alimentée en tant que charge (ZL) à partir de la tension continue régulée (-UW) du convertisseur continu-continu (D), le pont d'interrupteurs en H commutant à basse fréquence la polarité de la tension (UAB) aux bornes de la lampe, de sorte que la lampe à décharge haute pression est alimentée à ses bornes d'entrée (A, B) avec une tension alternative basse fréquence de forme rectangulaire et sans fraction de courant continu, une composante inductive de charge (ZL), représentée par un starter à inductance entre la lampe à décharge haute pression et le pont d'interrupteurs en H, ainsi qu'un générateur d'impulsions (PG) qui génère des impulsions rectangulaires pour la commutation du pont d'interrupteurs en H, caractérisé en ce que le convertisseur continu-continu (D) génère une tension continue négative (-UW) régulée, par rapport à la masse (0V) du véhicule, que la moyenne dans le temps du potentiel aux bornes de la lampe, pendant le fonctionnement de la lampe à décharge haute pression, est négative par rapport à la masse (0V) du véhicule, et que le générateur d'impulsions (PG) fournit des impulsions rectangulaires en raison desquelles un temps mort est produit à chaque commutation des branches du pont, temps mort pendant lequel tous les transistors de commutation (T5 - T8) du pont d'interrupteurs en H sont coupés ou bloqués, la durée d'impulsion (t) des impulsions rectangulaires du générateur d'impulsions (PG) correspondant au temps mort et la fréquence de récurrence des impulsions correspondant à la double fréquence rectangulaire (2f).

2. Ballast selon la revendication 1, caractérisé en ce que les transistors de commutation (T5 - T8) du pont d'interrupteurs sont des transistors MOSFET de puissance.

3. Ballast selon la revendication 2, caractérisé en ce que le générateur d'impulsions (PG) est connecté d'une part à un diviseur (FF) réalisé comme une bascule bistable déclenchée par des flancs et d'autre part aux premières entrées d'une première porte NON-ET (NON-ET 1) et d'une seconde porte NON-ET (NON-ET 2), que la première et la seconde sortie (Q, $\overline{Q}$) du diviseur (FF) sont connectées respectivement à une seconde entrée de la première porte NON-ET (NON-ET 1) et à une seconde entrée de la seconde porte NON-ET (NON-ET 2), et que chaque sortie de la première (NON-ET 1) et de la seconde porte NON-ET (NON-ET 2) est connectée à deux sources de courant commandées (T1 - T4, R1 - R8) qui produisent la commutation des transistors de commutation (T5 - T8) d'une branche du pont, les sources de courant commandées (T1 - T4, R1 - R8) étant connectées à la tension de bord positive (+UB).

# FIG 1

# FIG 2